# EUROPEAN PATENT APPLICATION

(11) **EP 4 718 286 A1**
(43) Date of publication of application: **01.04.2026**
(21) Application number: 24814401.6
(22) Date of filing: 27.05.2024
(51) Int. Cl.: G06F 16/909, H04L 67/52, G01C 21/34, G06F 18/22, G06F 16/29

(54) **METHOD FOR DETERMINING NAVIGATION ADDRESS, DATA PROCESSING APPARATUS, AND STORAGE MEDIUM**

(30) Priority: 31.05.2023 CN 202310632874
(71) Applicant: BYD Company Limited, Shenzhen, Guangdong 518118 (CN)
(72) Inventor: LING, Baishun, Shenzhen, Guangdong 518118 (CN); YANG, Dongsheng, Shenzhen, Guangdong 518118 (CN); LIU, Ke, Shenzhen, Guangdong 518118 (CN); SHEN, Zhong, Shenzhen, Guangdong 518118 (CN); ZHANG, Youliang, Shenzhen, Guangdong 518118 (CN)
(74) Representative: Wu, Ting
(86) International application number: PCT/CN2024/095612
(87) International publication number: WO 2024/245204

(57) **Abstract**

A navigation address determining method, a data processing apparatus, and a storage medium are provided. The method includes: identifying a first point of interest POI address in a navigation command; obtaining, based on the first POI address, N similar POI addresses and address types of the N similar POI addresses by retrieving an address data set, where each of the N similar POI addresses is similar to the first POI address, and N is an integer greater than or equal to 1; determining a first address type based on the address types of the N similar POI addresses; and determining a navigation address in a map based on the first POI address and the first address type.

## Description

This application claims priority to Chinese Patent Application No. 202310632874.8, filed with the China National Intellectual Property Administration on May 31, 2023 and entitled "NAVIGATION ADDRESS DETERMINING METHOD AND RELATED APPARATUS", which is incorporated herein by reference in its entirety.

### TECHNICAL FIELD

This application relates to the field of information technologies, and in particular, to a navigation address determining method, a data processing apparatus, and a storage medium.

### BACKGROUND

With progress of industrial technology and improvement of people's living standards, a vehicle, as a means of transportation, plays an increasingly important role in people's daily life. With widespread use of the vehicle, an in-vehicle navigation apparatus, as a common vehicle electronic product, has also experienced rapid development. As navigation can implement planning and display of a driving route, people are increasingly reliant on navigation when driving.

The navigation is a process of instructing and monitoring a device or a user to move from one place to another, and navigation address identification is a key to a navigation technology. Currently, when navigation is performed, a common practice in the industry is to identify an entity to be navigated to, and then enter the entity to a map for navigation. Because a navigation command is entered by the user, and names of locations in the map may be various, it is very likely that a navigation address determined in the map is the same as or similar to an entity in the command, but the navigation address is actually not a destination that the user wants to go to. This greatly reduces navigation accuracy.

### SUMMARY

Embodiments of this application provide a navigation address determining method, a data processing apparatus, and a storage medium, which can improve navigation accuracy, thereby improving user experience.

According to a first aspect, an embodiment of this application provides a navigation address determining method, where the method includes:
identifying a first point of interest (Point Of Interest, POI) address in a navigation command;
obtaining, based on the first POI address, N similar POI addresses and address types of the N similar POI addresses by retrieving an address data set, where each of the N similar POI addresses is similar to the first POI address, and N is an integer greater than or equal to 1;
determining a first address type based on the address types of the N similar POI addresses; and
determining a navigation address in a map based on the first POI address and the first address type.

For example, a value of N may be an integer such as 1, 2, 3, or 4.

In this embodiment of this application, the first POI address in the navigation command may be identified, and a first address type that may correspond to the first POI address is determined based on the address data set. When a navigation address corresponding to a POI address is determined in the map, a more possible navigation address may be obtained in combination with the first address type. In other words, an address in an address type whose probability is not high is screened out, to make a determined navigation address more accurate, thereby improving navigation accuracy and improving user experience.

In some implementations of the first aspect, the identifying a first POI address in a navigation command includes:
identifying, by using a navigation entity identification model, the navigation command entered by a user to obtain an entity in the navigation command; and
determining the first POI address based on the entity in the navigation command.

In this implementation, entity identification may be performed on a command entered by the user, and the entity is analyzed again to obtain a POI address.

In some implementations of the first aspect, the navigation entity identification model is obtained through training based on a part or all of POI addresses in the address data set.

In this way, an identification capability of the navigation entity identification model may be enhanced to improve navigation accuracy, thereby improving user experience.

In some implementations of the first aspect, the address data set includes a plurality of POI addresses and address types corresponding to the plurality of POI addresses. The POI address in the address data set is determined based on at least one of the following: a plurality of navigation intentions or a plurality of real addresses.

In some implementations of the first aspect, the plurality of navigation intentions may be destinations of navigation processes accumulated along navigation lines, and the plurality of real addresses may be common addresses that are in a nationwide range and that are from address data disclosed online.

In this way, a data resource of a company may be effectively used to construct a dedicated address data set, thereby improving accuracy of an address type corresponding to address data and improving user experience.

In some implementations of the first aspect, the determining a first address type based on the address types of the N similar POI addresses includes:
calculating a first similarity between each of the N similar POI addresses and the first POI address; and
determining the first address type based on an address type and the first similarity that are of each of the N similar POI addresses.

In this implementation, the N similar POI addresses may be obtained by performing fuzzy retrieval based on the first POI address. When the fuzzy retrieval is performed, the fuzzy retrieval may be performed for similarity based on a semantic meaning, a text, a voice, or the like. For the N similar POI addresses obtained through fuzzy retrieval, similarity calculation may be performed again to obtain a similarity between the N similar POI addresses and the first POI address, and the first address type is determined based on an address type of a similar POI address that has a high similarity. In other words, in a process of determining the first address type, similarity matching is performed twice on a similar POI address, so that the first address type is closer to an address type of the first POI address. In this way, an address type may be determined more accurately and quickly, thereby improving navigation accuracy and further improving user experience.

In some implementations of the first aspect, the determining the first address type based on an address type and the first similarity that are of each of the N similar POI addresses includes: determining, as the first address type, an address type of a similar POI address that is in the N similar POI addresses and that has a first similarity being greater than or equal to a first threshold.

In some implementations of the first aspect, the determining the first address type based on an address type and the first similarity that are of each of the N similar POI addresses includes: determining, as the first address type, an address type of a similar POI address that is in the N similar POI addresses and that has a maximum first similarity.

In some implementations of the first aspect, the determining a first address type based on the address types of the N similar POI addresses includes: determining, as the first address type, an address type of a similar POI address that is in the N similar POI addresses and that has a most frequent occurring address type.

In some implementations of the first aspect, the first threshold is used to indicate a condition that a similarity degree between a similar POI address and the first POI address needs to meet. The first threshold is predefined or preset. For example, the first threshold may be a value greater than 60%, such as 75% or 80%.

When the first threshold is set, an address type of a similar POI address that is closer to the first POI address may be selected from determined similar POI addresses, so that the address type is determined more accurately and quickly.

In some implementations of the first aspect, the determining a navigation address in a map based on the first POI address and the first address type includes:
determining M map POI addresses in the map based on the first POI address and the first address type, where the M map POI addresses have corresponding real addresses in the map, and M is an integer greater than or equal to 1;
determining a target address based on a second similarity between each of the M map POI addresses and the first POI address; and
using the target address as the navigation address if a second similarity between the target address and the first POI address is greater than a second threshold.

A value of M may be an integer such as 1, 2, 3, or 4, and M≥1.

In this implementation, the M map POI addresses may be obtained by searching the map based on the first POI address and the first address type. The search may be performed for similarity based on a semantic meaning, a text, and the like. For the M map POI addresses obtained through searching, the similarity calculation may be performed again to obtain a similarity between each of the M map POI addresses and the first POI address. The navigation address is determined based on a map POI address that has a high similarity. In other words, in a process of determining the navigation address, similarity matching is performed on a map POI address, so that the determined navigation address is closer to the first POI address. In this way, the navigation address may be determined more accurately and quickly, thereby improving navigation accuracy, and further improving user experience.

In some implementations of the first aspect, the second threshold is used to indicate a condition that a similarity degree between a map POI address and the first POI address needs to meet. The second threshold is predefined or preset. For example, the second threshold may be a value greater than 75%, such as 80% or 90%.

When the second threshold is set, a map POI address that is closer to the first POI address may be selected from determined map POI addresses, so that the navigation address is determined more accurately and quickly.

In some implementations of the first aspect, the determining a target address based on a second similarity between each of the M map POI addresses and the first POI address includes: determining, as the target address, a map POI address that is in the M map POI addresses and that has a maximum second similarity.

In some implementations of the first aspect, the navigation address is used to generate a navigation route to the navigation address.

In this way, the navigation command may be executed more accurately and intelligently.

In some implementations of the first aspect, the method further includes:
if the second similarity between the target address and the first POI address is less than the second threshold, outputting prompt information, where the prompt information is used to indicate the user to enter a POI address or indicate that the first POI address is an invalid address.

In this way, executing the invalid address may be effectively avoided, thereby improving user experience.

According to a second aspect, an embodiment of this application provides a data processing apparatus, where the data processing apparatus includes an identification unit and a processing unit. The identification unit is configured to identify a first point of interest POI address in a navigation command.

The processing unit is configured to:
obtain, based on the first POI address, N similar POI addresses and address types of the N similar POI addresses by retrieving an address data set, where the N similar POI addresses are similar to the first POI address, and N is an integer greater than or equal to 1;
determine a first address type based on the address types of the N similar POI addresses; and
determine a navigation address in a map based on the first POI address and the first address type.

In some implementations of the second aspect, the identification unit is further configured to identify, by using a navigation entity identification model, the navigation command entered by a user to obtain an entity in the navigation command.

In some implementations of the second aspect, the processing unit is further configured to determine the first POI address based on the entity in the navigation command.

In some implementations of the second aspect, the navigation entity identification model is obtained through training based on a part or all of POI addresses in the address data set.

In some implementations of the second aspect, the address data set includes a plurality of POI addresses and address types corresponding to the plurality of POI addresses; and
the POI address in the address data set is determined based on at least one of the following: a plurality of navigation intentions or a plurality of real addresses.

In some implementations of the second aspect, in the determining a first address type based on the address types of the N similar POI addresses, the processing unit is configured to:
calculate a first similarity between each of the N similar POI addresses and the first POI address; and
determine the first address type based on an address type and the first similarity that are of each of the N similar POI addresses.

In some implementations of the second aspect, in the determining the first address type based on an address type and the first similarity that are of each of the N similar POI addresses, the processing unit is configured to: determine, as the first address type, an address type of a similar POI address that is in the N similar POI addresses and that has a first similarity being greater than or equal to a first threshold.

In some implementations of the second aspect, in the determining the first address type based on an address type and the first similarity that are of each of the N similar POI addresses, the processing unit is configured to: determine, as the first address type, an address type of a similar POI address that is in the N similar POI addresses and that has a maximum first similarity.

In some implementations of the second aspect, in the determining a first address type based on the address types of the N similar POI addresses, the processing unit is configured to: determine, as the first address type, an address type of a similar POI address that is in the N similar POI addresses and that has a most frequent occurring address type.

In some implementations of the second aspect, in the determining a navigation address in a map based on the first POI address and the first address type, the processing unit is configured to:
determine M map POI addresses in the map based on the first POI address and the first address type, where the M map POI addresses have corresponding real addresses in the map, and M is an integer greater than or equal to 1;
determine a target address based on a second similarity between each of the M map POI addresses and the first POI address; and
use the target address as the navigation address if a second similarity between the target address and the first POI address is greater than a second threshold.

In some implementations of the second aspect, in the determining a target address based on a second similarity between each of the M map POI addresses and the first POI address, the processing unit is configured to: determine, as the target address, a map POI address that is in the M map POI addresses and that has a maximum second similarity.

In some implementations of the second aspect, the navigation address is used to generate a navigation route to the navigation address.

In some implementations of the second aspect, the processing unit is further configured to output prompt information if the second similarity between the target address and the first POI address is less than the second threshold, where the prompt information is used to indicate the user to enter a POI address or indicate that the first POI address is an invalid address.

According to a third aspect, an embodiment of this application provides a data processing apparatus, where the data processing apparatus includes a processor and a memory. The processor executes instructions stored in the memory, to enable the data processing apparatus to implement the method according to any one of implementations of the first aspect.

In some implementations of the first aspect, the data processing apparatus further includes a communication interface. The communication interface is configured to receive and/or send data, and/or the communication interface is configured to provide input and/or output for the processor.

It should be noted that the foregoing embodiment is described by using an example in which a processor (or referred to as a general processor) executes the method by invoking computer instructions. In a specific implementation process, the processor may alternatively be a dedicated processor. In this case, the computer instructions are already loaded into the processor in advance. In some implementations of the first aspect, the processor may alternatively include the dedicated processor and the general processor.

In some implementations of the first aspect, the processor and the memory may be further integrated into one component. In other words, the processor and the memory may be further integrated together.

According to a fourth aspect, an embodiment of this application provides a computer-readable storage medium. The computer-readable storage medium stores instructions. When the instructions are run in a data processing apparatus, the data processing apparatus is enabled to implement the method according to any one of implementations of the first aspect.

According to a fifth aspect, this application provides a computer program product. The computer program product includes computer instructions. When the instructions are run in a data processing apparatus, the data processing apparatus is enabled to implement the method according to any one of implementations of the first aspect.

In some implementations of the first aspect, the computer program product may be a software installation package or an image file. When the foregoing method needs to be used, the computer program product may be obtained and executed on a computing device.

For beneficial effects of the technical solutions provided in the second aspect to the fifth aspect of this application, refer to the beneficial effects of the technical solutions in the first aspect. Details are not described herein again.

### BRIEF DESCRIPTION OF DRAWINGS

The following briefly describes the accompanying drawings required for describing the embodiments.
FIG. 1 is a schematic diagram of an architecture of a system for determining a navigation address according to an embodiment of this application;
FIG. 2 is a schematic flowchart of a navigation address determining method according to an embodiment of this application;
FIG. 3 is a schematic flowchart of a navigation address determining method according to another embodiment of this application;
FIG. 4 is a schematic diagram of a structure of a data processing apparatus according to an embodiment of this application; and
FIG. 5 is a schematic diagram of a structure of a data processing apparatus according to another embodiment of this application.

### DESCRIPTION OF EMBODIMENTS

The following describes embodiments of this application in detail with reference to the accompanying drawings.

The following first uses an example to explain some technical terms used in the embodiments of this application.
1. Point of interest (POI): POI is also referred to as an interest tag and is a term used in a geographic information system. The POI may generally refer to a geographical object capable of being abstracted as a point, especially some geographical entities that are closely related to people's lives, such as a school, a bank, a restaurant, a gas station, a hospital, or a supermarket. A main purpose of a point of interest is to describe an address of a thing or an event, so as to enhance, to a great extent, capabilities to describe and query a location of the thing or the event, thereby improving precision and a speed of geographical positioning.

The following describes a system architecture applied in the embodiments of this application. It should be noted that a system architecture and a service scenario described in this application are intended to describe the technical solutions in this application more clearly, and do not constitute a limitation on the technical solutions provided in this application. A person of ordinary skill in the art can learn that with evolution of system architectures and emergence of new service scenarios, the technical solutions provided in this application are also applicable to a similar technical problem.

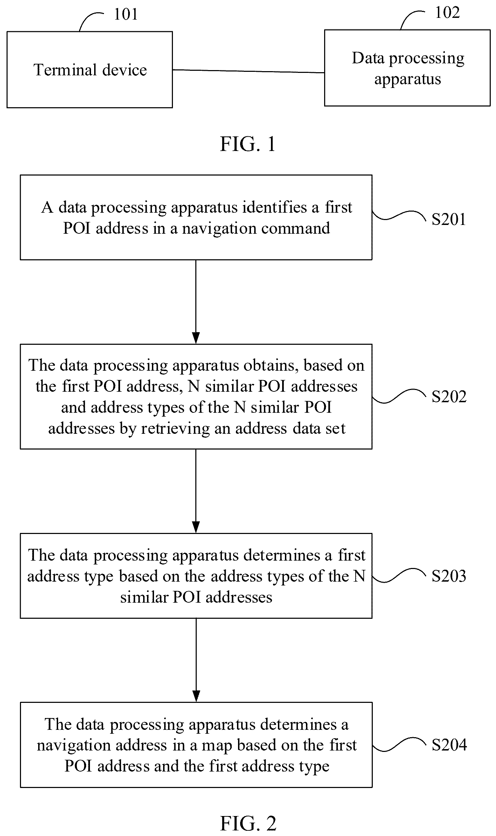

Referring to FIG. 1, FIG. 1 is a schematic diagram of an architecture of a navigation system according to an embodiment of this application. The navigation system includes a terminal device 101 and a data processing apparatus 102. It should be noted that the navigation system may include one or more terminal devices and one or more data processing apparatuses, and the embodiment with reference to FIG. 1 is merely an example. The following uses examples to describe the terminal device and the data processing apparatus.

The terminal device 101 is a device that has a data processing capability and that can interact with a user. In some implementations, the terminal device can interact with the user, for example, present a user interface, receive an operation input by the user, or the like. For example, the terminal device includes but is not limited to a handheld terminal, a wearable device, an entertainment device, a transportation device, and the like. The handheld device is a mobile phone, a tablet computer, a notebook computer, a mobile police system, or the like. The wearable device is a smart band, a smartwatch, smart glasses, or the like. The transportation device is a vehicle, a ship, an aircraft, a rail transit (for example, a subway or a high-speed railway), a logistics robot, or the like. It should be understood that, although FIG. 1 is described by using the terminal device as an example, this application is also applicable to another device that has a requirement for determining a navigation address.

In some implementations, that the terminal device can interact with the user may include at least one of the following: The terminal device outputs information to the user, or the terminal device receives information entered by the user. For example, the terminal device 101 may receive a navigation command entered by the user, and the terminal device 101 may further present prompt information to the user to indicate the user to enter a POI address or indicate that a specific POI address is an invalid address.

The data processing apparatus 102 is a device with a data processing capability. The data processing apparatus may be a physical apparatus, such as a server, a cloud, or a host; or may be a virtual apparatus, such as a virtual machine, software, program code, or a container. In some implementations, the data processing apparatus 102 may be integrated into the terminal device 101.

In some implementations, the data processing apparatus 102 may identify a first POI address in the navigation command, and determine, based on an address data set, a first address type that may correspond to the first POI address. When a navigation address corresponding to a POI address is determined in a map, a more possible navigation address may be obtained in combination with the first address type. In other words, an address in an address type whose probability is not high is screened out, to make a determined navigation address more accurate, thereby improving navigation accuracy and improving user experience.

In some implementations, the navigation command may be provided by the terminal device 101 to the data processing apparatus 102. Specifically, the terminal device 101 and the data processing apparatus 102 have a communication capability, and a communication connection may exist between the terminal device 101 and the data processing apparatus 102. For example, the terminal device 101 may communicate with the data processing apparatus 102 by transmitting information to the data processing apparatus 102 and/or receiving information from the data processing apparatus 102. For example, the terminal device 101 may send, to the data processing apparatus 102, a received navigation command entered by the user, an entity obtained based on the navigation command, a POI address, and the like. The data processing apparatus 102 may return, to the terminal device 101, a navigation address, a navigation route, and the like.

In some implementations, the terminal device 101 and the data processing apparatus 102 may be directly connected in a wired communications manner, for example, a tangible medium such as a metal wire or an optical fiber, or may alternatively be indirectly connected in a wireless communications manner, for example, an ultra-wideband (ultra-wideband, UWB) technology, a long term evolution (Long Term Evolution, Long Term Evolution) communications technology, a 5th generation mobile communication technology (5th generation mobile networks or 5th generation wireless systems, 5th-Generation, 5G or 5G technology for short), a global system for mobile communications (global System for mobile communications, GSM), a general packet radio service (general packet radio Service, GPRS), or a universal mobile telecommunications system (universal mobile telecommunications system, UMTS).

The following describes in detail a navigation address determining method provided in an embodiment of this application.

Referring to FIG. 2, FIG. 2 is a schematic flowchart of a navigation address determining method according to an embodiment of this application. As shown in FIG. 2, the navigation address determining method includes operations S201 to S204. The method may be applied to the navigation system shown in FIG. 1. Optionally, the method may be further applied to the data processing apparatus 102 in the navigation system shown in FIG. 1.

S201: A data processing apparatus identifies a first POI address in a navigation command.

The data processing apparatus is a device that has a data processing capability and a communication capability. Refer to the foregoing descriptions. The navigation command is a command or information that is entered by a user and that indicates a navigation requirement of the user. In some implementations, a manner in which the user enters the navigation command may include voice input, keyboard input, and the like. In some implementations, the data processing apparatus may directly receive a navigation command entered by the user. Alternatively, the terminal device receives the navigation command entered by the user and submits the navigation command entered by the user to the data processing apparatus.

A POI address may be an address indicating a geographical entity of interest. For example, the POI address may be a home of an aunt, an XX railway station, an attraction A, an attraction B, a home of a user A, or the like.

In some implementations, the data processing apparatus identifies the navigation command entered by the user to obtain an entity in the navigation command, and the data processing apparatus determines the first POI address based on the entity in the navigation command. For example, the navigation command entered by the user may be "I want to go to XX railway Station". The entity in the navigation command includes "I" and "XX railway station". Because "XX railway station" is an address, "XX railway station" is determined as the first POI address.

In some implementations, that the navigation command entered by the user is identified to obtain the entity in the navigation command may be implemented by using a navigation entity identification model. The navigation entity model has an address entity identification capability.

In some implementations, the navigation entity identification model is obtained through training based on a part or all of POI addresses in an address data set. In some implementations, the navigation entity identification model may be obtained through training by injecting a part or all of POI addresses into a natural language processing (Natural Language Processing, NLP) entity identification model. For example, the address data set includes a plurality of POI addresses and address types corresponding to the plurality of POI addresses. The POI address in the address data set is determined based on a plurality of navigation intentions or a plurality of real addresses. In some implementations, the address data set may further include an actual location corresponding to a POI address such as a latitude and longitude, a map tile identification (identification, ID), and the like.

The plurality of navigation intentions may be destinations of navigation processes accumulated along navigation lines. For example, in a navigation process of "going to XX community", the navigation intention may be "XX community". For another example, in a navigation process of "heading to the West Lake", the navigation intention may be "West Lake". The plurality of real addresses may be common addresses that are in a nationwide range and that are from address data disclosed online, for example, a scenic area address (a tourist attraction), a restaurant address, an alias (which may be a local colloquial name), a shopping mall address, and a transportation facility address (a railway station, a subway station, or a bus station).

In some implementations, the data processing apparatus may construct a Faiss (Facebook AI Similarity Search) retrieval library based on a part or all of POI addresses in the address data set. In this way, an address resource database may be established and a dedicated address data set may be constructed, so as to improve navigation accuracy by performing retrieval based on the Faiss retrieval library. The Faiss is a library for clustering and similarity search that provides efficient similarity search and clustering for dense vectors and supports search for billions of vectors.

S202: The data processing apparatus obtains, based on the first POI address, N similar POI addresses and address types of the N similar POI addresses by retrieving an address data set.

N is an integer, and N≥1. For example, N is equal to 1. For another example, N≥2. In this case, there are a plurality of similar POI addresses.

A similar POI address is an address obtained by performing fuzzy retrieval in the address data set, and may be similar to the first POI address in terms of a text, voice, and a semantic meaning. Text similarity is used as an example. A POI address textually similar to "XX station" may be "XX east station", "XX railway station", "XXX high-speed railway station", or the like. Voice similarity is used as an example. A POI address similar to "xunlimen (Gate of Righteousness)" in voice may be "xulimen (Xu Li Gate)", "xunlimen (Xun Li Gate)", "xunlimen (Gate of inquiry)", or the like. Semantic meaning similarity is used as an example. A POI address that has a similar meaning to "window of the world" may be "world window", "global window", or the like.

The address type means a type of an address. For example, the address type may include a dining service (for example, a restaurant, an eatery, or a milk tea shop), a shopping service (for example, a shopping mall, a pedestrian street, or an integrated market), a life service (a travel agency, a business hall, and a ticket office), a business residence (a residential community or an industrial park), a corporation (a company, a factory, or a base), a transportation facility (a bus station, a railway station, or a subway station), a tourist attraction, or a medical and health service (a hospital, a clinic, or a first aid center).

For example, Table 1 shows each similar POI address and an address type of each similar POI address.

**Table 1 Similar POI Addresses and Address Types of Similar POI Addresses**

| Similar POI address | point A | point B | point C | point D | point E |
|---|---|---|---|---|---|
| Address type of similar POI address | business residence | shopping service | tourist attraction | shopping service | tourist attraction |

For example, the data processing apparatus retrieves the first POI address in the Faiss retrieval library, and returns five similar POI addresses and address types of the five similar POI addresses.

S203: The data processing apparatus determines a first address type based on the address types of the N similar POI addresses.

Specifically, the first address type is one of the address types of the N similar POI addresses. N is an integer, and N≥1.

When N=1, the first address type is an address type of one similar POI address.

In some implementations, the data processing apparatus calculates a similarity between the one similar POI address and the first POI address. If a first similarity between the one similar POI address and the first POI address is greater than or equal to a first threshold, the first address type is an address type of the one similar POI address. On the contrary, if the first similarity between the one similar POI address and the first POI address is less than the first threshold, the data processing apparatus outputs prompt information. The prompt information is used to indicate the user to enter a POI address or indicate that the first POI address is an invalid address.

When N≥2, the data processing apparatus may determine the first address type in the following manners.

Manner 1: The first address type is an address type corresponding to a POI address that is in the N similar POI addresses and that has a similarity with the first POI address, where the similarity is greater than or equal to the first threshold.

In some implementations, the data processing apparatus calculates a similarity between each of the N similar POI addresses and the first POI address to obtain a first similarity of each of the N similar POI addresses. The data processing apparatus obtains the first address type based on an address type of a similar POI address that is in the N similar POI addresses and that has a first similarity being greater than or equal to the first threshold. In this way, an address type may be determined more accurately and quickly, thereby improving navigation accuracy and further improving user experience.

For example, the first similarity may reflect a similarity between a similar POI address and the first POI address in terms of a text and a semantic meaning.

For example, the first threshold is used to indicate a condition that a similarity degree between a similar POI address and the first POI address needs to meet. The first threshold is predefined or preset. For example, if the first threshold is 60%, the first similarity greater than or equal to the first threshold may be 60%, 75%, 80%, or the like.

For ease of understanding, Table 2 shows a first similarity corresponding to each similar POI address.

**Table 2 Similarity Value Corresponding to Each Similar POI Address**

| Similar POI address | point A | point B | point C | point D | point E |
|---|---|---|---|---|---|
| Address type of a similar POI address | business residence | shopping service | tourist attraction | shopping service | tourist attraction |
| First similarity of a similar POI address | 45% | 50% | 60% | 75% | 80% |

In an example in which the first threshold is 60%, similar POI addresses that have a similarity being greater than or equal to the first threshold are point C, point D, and point E. Address types obtained by using the data processing apparatus are "shopping service" and "tourist attraction". In this case, the first address type is "shopping service" or "tourist attraction".

Manner 2: The first address type is an address type corresponding to a POI address that is in the N similar POI addresses and that has a highest similarity with the first POI address.

For example, in Table 2, the POI address that has a highest similarity with the first POI address is point E. In this case, the first address type is an address type corresponding to point E, that is, "tourist attraction".

Manner 3: The first address type is an address type that appears most frequently in the N similar POI addresses. An example is provided with reference to Table 1.

For example, it can be learned from Table 1 that an address type "tourist attraction" appears twice, an address type "shopping service" appears twice, and an address type "business residence" appears once. An address type that appears most frequently is the address types "tourist attraction" and "shopping service". Therefore, the first address type is "tourist attraction" or "shopping service".

It should be understood that the foregoing manners are used as examples. The first address type may be determined by using another manner, which is not limited in this application. In some implementations, the foregoing manners may be combined.

S204: The data processing apparatus determines a navigation address in a map based on the first POI address and the first address type.

The map is a pattern or a graphic for selectively representing several phenomena of the earth (or another planet) on a plane or a spherical surface in a two-dimensional or multidimensional form or manner in accordance with a specific rule. The map has a strict foundation of mathematics, a symbol system and text notes. The map uses a map generalization principle to scientifically reflect distribution features of a natural phenomenon and a socioeconomic phenomenon as well as a relationship therebetween. For example, the map may be Amap.

That the navigation address is determined in the map based on the first POI address and the first address type may be implemented in the following manners.

Manner 1: The data processing apparatus determines M map POI addresses in the map based on the first POI address and the first address type. The M map POI addresses have corresponding real addresses in the map. The data processing apparatus determines the navigation address based on a second similarity between the M map POI addresses and the first POI address. M is an integer, and M≥1.

For example, a value of M may be an integer such as 1, 2, 3, or 4.

Further, that the navigation address is determined based on the second similarity between the M map POI addresses and the first POI address may be implemented in the following manner.

The data processing apparatus determines a target address based on the second similarity between the M map POI addresses and the first POI address. The target address is a map POI address that is in the M map POI addresses and that has a highest second similarity with the first POI address. If a second similarity between the target address and the first POI address is greater than the second threshold, the data processing apparatus uses the target address as the navigation address.

For example, the data processing apparatus denotes a maximum similarity as sim, and determines whether sim is greater than the second threshold. If sim is greater than the second threshold, the data processing apparatus uses the target address as the navigation address. If sim is less than the second threshold, the data processing apparatus initiates a second round of inquiry for an address, executes navigation after obtaining the address, and saves the address label.

For example, the data processing apparatus enters the first POI address and the first address type into an interface of the map. The data processing apparatus obtains, in the map, the M map POI addresses that are obtained by searching based on the first POI address and the first address type. The M map POI addresses have corresponding real addresses in the map. The data processing apparatus calculates a similarity between each of the M map POI addresses and the first POI address, and uses a map POI address that is in the M map POI addresses and that has a highest similarity with the first POI address as the target address. When the second similarity between the target address and the first POI address is greater than the second threshold, the data processing apparatus uses the target address as the navigation address. In this way, the navigation address may be determined more accurately and quickly, thereby improving navigation accuracy, and further improving user experience.

For example, the map is Amap. When the data processing apparatus obtains the M map POI addresses by searching based on the first POI address and the first address type, searching manners may include a keyword search, a nearby search, an input prompt, and the like. Specifically, the data processing apparatus may enter the first POI address and the first address type into an interface of Amap, and receive, by using the interface of the Amap, M map POI addresses returned by Amap.

Specifically, similarity calculation may reflect a similarity between each of the M map POI addresses and the first POI address in terms of a text similarity and a semantic meaning similarity.

For example, the second threshold is used to indicate a condition that a similarity degree between a map POI address and the first POI address needs to meet. The second threshold is predefined or preset. For example, if the second threshold is 75%, the second similarity greater than the second threshold may be 80%, 90%, or the like.

For example, the first POI address is "window of the world" and the first address type is "tourist attraction". M map POI addresses are obtained by retrieving in the map, and a (second) similarity between each of the M map POI addresses and "window of the world" is calculated. Table 3 shows each map POI address and a second similarity of each map POI address, where Dr1 to Dr5 are examples of five map POI addresses (that is, M=5).

**Table 3 Each Map POI Address and Second Similarity of Each Map POI Address**

| Map POI address | Dr1 | Dr2 | Dr3 | Dr4 | Dr5 |
|---|---|---|---|---|---|
| Second similarity of a map POI address | 45% | 50% | 60% | 75% | 80% |

In this example, it can be learned from the table that the target address is Dr5. For example, if the second threshold is 75%, the navigation address is Dr5.

Manner 2: The navigation address may be a map POI address that is in the M map POI addresses and that has a highest second similarity with the first POI address.

For example, in Table 3, when Dr5 is the map POI address that has a highest second similarity with the first POI address, the navigation address is Dr5.

Manner 3: An address that is the first POI address and whose address type is the first address type is retrieved in the map. The first address returned by the map is used as the navigation address, or an address that is in the addresses returned by the map and that is closest to a current location of the user is used as the navigation address.

It should be understood that the foregoing implementation is an example. In a specific implementation process, there may be more implementations. In addition, a plurality of implementations may be combined.

In some implementations, if the second similarity between the target address and the first POI address is less than the second threshold, the data processing apparatus outputs prompt information. The prompt information is used to indicate the user to enter a POI address or indicate that the first POI address is an invalid address. Optionally, after receiving the POI address entered by the user, the data processing apparatus may perform navigation, and save the address label. In this way, executing the invalid address may be effectively avoided, thereby improving user experience.

For example, if the second threshold is 85%, it can be learned from Table 3 that the similarities are all less than the second threshold, the data processing apparatus outputs prompt information (that is, a second round of interaction). The prompt information is used to indicate the user to enter a POI address or indicate that the first POI address is an invalid address. For example, the prompt information may be "Please re-enter a POI address" or "You entered an invalid address".

In some implementations, the data processing apparatus may generate a navigation route to the navigation address based on the navigation address. In this way, the navigation command may be executed more accurately and intelligently. In an example in which the foregoing navigation address is Dr5, the data processing apparatus may generate a navigation route to Dr5.

In the embodiment shown in FIG. 2, the data processing apparatus may identify the first POI address in the navigation command, and determine, based on the address data set, the first address type that may correspond to the first POI address. When the data processing apparatus determines a navigation address corresponding to a POI address in the map, a more possible navigation address may be obtained in combination with the first address type. In other words, an address in an address type whose probability is not high is screened out to make a determined navigation address more accurate, thereby improving navigation accuracy and improving user experience.

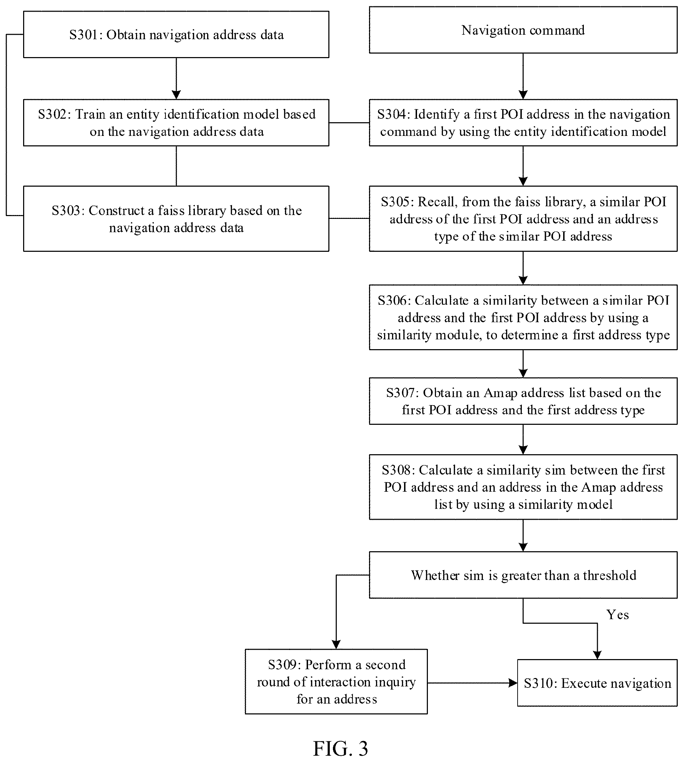

The foregoing embodiment shown in FIG. 2 includes a plurality of possible solutions. For ease of understanding, the following describes one of the possible solutions. It should be understood that for explanation of some terms and logic in the solution shown in FIG. 3, refer to the embodiment shown in FIG. 2.

Referring to FIG. 3, FIG. 3 is a schematic flowchart of a navigation address determining method according to another embodiment of this application. The method shown in FIG. 3 may be applied to the navigation system shown in FIG. 1, or to the data processing apparatus 102 in the navigation system shown in FIG. 1. The method includes one or more operations in S301 to S310. Details are as follows.

S301: Obtain navigation address data.

The navigation address data may be map data accumulated online, public navigation address data, or the like. For example, a data processing apparatus or a server may export online data of an intelligent voice navigation system, select address data with POI address from navigation intentions, and use the address data with POI as the navigation address data. For example, the data processing apparatus may collect address data disclosed online and obtain a common address in a nationwide range.

S302: Train an entity identification model based on the navigation address data.

Specifically, the navigation address data (for example, the address data with a POI address in 301) is added to a navigation entity identification model, so that an identification capability of the entity identification model for address identification is enhanced. In this way, when the user initiates a navigation command with a POI address, a corresponding POI address is accurately identified.

S303: Construct a faiss library based on the navigation address data.

This operation may construct, based on the navigation address data, the faiss library (or referred to as a faiss retrieval library) used for navigation. For example, one piece of data in the faiss library may be "window of the world, attraction, latitude and longitude coordinate", where "window of the world" is a POI address, "attraction" is an address type of the POI address, and "latitude and longitude coordinate" is an actual location corresponding to the POI address. Optionally, the faiss library may further include an address label, an alias, and the like of the POI address.

S304: Identify a first POI address in the navigation command by using the entity identification model.

For example, the navigation command may be "I want to go to the window of the world". The entity identification model can identify an entity "I" and an entity "window of the world". The entity identification model may further analyze whether the entity is an address. For example, the entity "I" is not an address and the entity "window of the world" is an address. In this case, "window of the world" is the first POI address.

It should be noted that the first POI address determined by the entity identification module may actually be a valid address, or may not be a valid address. For example, a navigation command "navigate to aunt's home". "Aunt's home" is identified by the entity identification model as the first POI address, but the first POI address may be valid or invalid.

S305: Recall, from the faiss library, a similar POI address of the first POI address and an address type of the similar POI address.

Specifically, this operation is to search, in the faiss library, the POI address identified by the entity identification model, to obtain a similar address. For example, five similar POI addresses may be recalled from the faiss library.

S306: Calculate a similarity between a similar POI address and the first POI address by using a similarity module, to determine a first address type.

Specifically, this operation is to calculate a similarity between an address list recalled by the faiss and the first POI address identified by the navigation entity identification model, to obtain an address type of a recalled address whose similarity value is greater than a threshold.

S307: Obtain an Amap address list based on the first POI address and the first address type.

Specifically, this operation is to enter to an interface of Amap, a POI address entity identified by the navigation entity identification model and an address type obtained by retrieving from the faiss, to obtain the Amap address list (or referred to as a search POI list). Search manners include a keyword search, a nearby search, and an input prompt that are of Amap.

Certainly, Amap may alternatively be replaced with another map, such as Baidu Map.

S308: Calculate a similarity sim between the first POI address and an address in the Amap address list by using a similarity model.

Specifically, this operation is to calculate a similarity between the obtained Amap address list and an entity identified by the entity model (that is, a first POI), to obtain a corresponding similarity value. A maximum similarity value is denoted as sim.

When sim is greater than the threshold, S310 is performed; or when sim is less than the threshold, S309 is performed.

S309: Perform a second round of interaction inquiry for an address.

Specifically, when the maximum similarity sim obtained through calculation between the address list returned by Amap and the entity identified by the entity model is less than the threshold, intelligent voice interaction performs the second round of inquiry to obtain the address.

Further, after the address is obtained through the second round of interaction, the address label may be saved.

For example, in an Amap address list corresponding to a POI address "aunt's home", a maximum similarity value is less than the threshold. Therefore, "aunt's home" is an invalid address. In this case, the address is obtained through the second round of interaction inquiry, and "aunt's home" is used as an address label of the address obtained through inquiry. This facilitates retrieval in next navigation, thereby improving intelligence of the navigation system and improving user experience.

S310: Execute navigation.

In the embodiment shown in FIG. 3, the first POI address in the navigation command is identified. The similar POI address and the address type of the similar POI are recalled from the faiss library to determine the first address type. The Amap address list is obtained in Amap based on the first POI address and the first address type. An address that is in the Amap address list and that has a highest similarity with the first POI address, where the highest similarity is greater than the threshold, is used as the navigation address. In this way, an address in an address type whose probability is not high is screened out, so that a determined navigation address is more accurate, thereby improving navigation accuracy and improving user experience.

The foregoing describes the method in the embodiments of this application in detail, and the following provides an apparatus in the embodiments of this application.

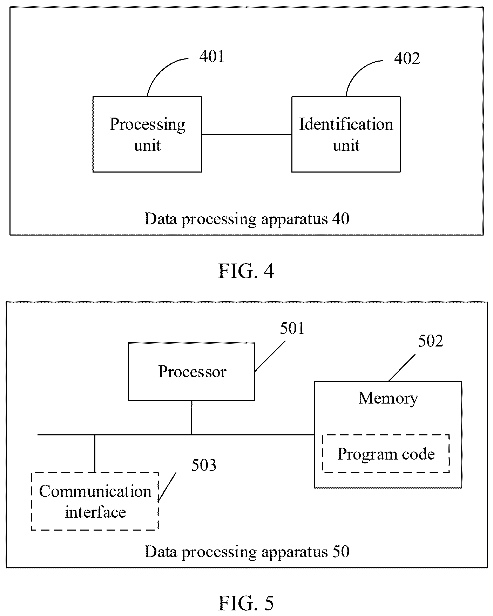

Referring to FIG. 4, FIG. 4 is a schematic diagram of a structure of a data processing apparatus according to an embodiment of this application. Referring to FIG. 4, a data processing apparatus 40 may include a processing unit 401 and an identification unit 402. The data processing apparatus 40 is configured to implement the foregoing navigation address determining method, for example, the navigation address determining method in the embodiments shown in FIG. 2 and FIG. 3.

It should be noted herein that the division of a plurality of units is merely logical division performed based on a function, and does not constitute a limitation on a specific structure of the data processing apparatus 40. In a specific implementation, some functional modules may be subdivided into more small functional modules, and some functional modules may alternatively be combined into one functional module.

In some implementations, the identification unit 402 is configured to identify a first point of interest POI address in a navigation command.

The processing unit 401 is configured to:
obtain, based on the first POI address, N similar POI addresses and address types of the N similar POI addresses by retrieving an address data set. The N similar POI addresses are similar to the first POI address. N is an integer, and N≥1;
determine a first address type based on the address types of the N similar POI addresses; and
determine a navigation address in a map based on the first POI address and the first address type.

In some implementations, the identification unit 402 is further configured to identify, by using a navigation entity identification model, the navigation command entered by a user to obtain an entity in the navigation command.

In some implementations, the processing unit 401 is further configured to determine the first POI address based on the entity in the navigation command.

In some implementations, the navigation entity identification model is obtained through training based on a part or all of POI addresses in the address data set.

In some implementations, the address data set includes a plurality of POI addresses and address types corresponding to the plurality of POI addresses.

The POI address in the address data set is determined based on a plurality of navigation intentions and/or a plurality of real addresses.

In some implementations, the processing unit 401 is further configured to:
calculate a similarity between each of the N similar POI addresses and the first POI address to obtain a first similarity of each of the N similar POI addresses; and
obtain the first address type based on an address type of a similar POI address that is in the N similar POI addresses and that has a first similarity being greater than a first threshold.

In some implementations, the processing unit 401 is further configured to:
determine M map POI addresses in the map based on the first POI address and the first address type, where the M map POI addresses have corresponding real addresses in the map, and M is an integer and M≥1;
determine a target address based on a second similarity between the M map POI addresses and the first POI address, where the target address is a map POI address that is in the M map POI addresses and that has a highest second similarity with the first POI address; and
use the target address as the navigation address if a second similarity between the target address and the first POI address is greater than a second threshold.

In some implementations, the navigation address is used to generate a navigation route to the navigation address.

In some implementations, the processing unit 401 is further configured to output prompt information if the similarity between the target address and the first POI address is less than the second threshold. The prompt information is used to indicate the user to enter a POI address or indicate that the first POI address is an invalid address.

It should be noted that the foregoing modules (the processing unit 401 and the identification unit 402) are configured to perform an operation related to the foregoing method. For example, the identification unit 402 is configured to execute related content in S201, and the processing unit 401 is configured to execute related content in S202 to S204.

FIG. 5 is a schematic diagram of a structure of a data processing apparatus according to another embodiment of this application. A data processing apparatus is a device with a processing capability. The device herein may be a device of an entity, such as a server (for example, a rack server) or a host, or may alternatively be a virtual device, such as a virtual machine or a container.

As shown in FIG. 5, a data processing apparatus 50 includes a processor 501, a memory 502 and one or more program codes, and may include a communication interface 503. It should be understood that a quantity of processors and memories in the data processing apparatus 50 is not limited in this application.

The processor 501 is a module for performing an operation, and may include a central processing unit (central processing unit, CPU), a graphics processing unit (graphics processing unit, GPU), a micro processor (micro processor, MP), a digital signal processor (digital signal processor, DSP), a micro control unit (Microcontroller Unit, MCU), or one or more integrated circuits for controlling program execution in the solutions in this application.

The memory 502 is configured to provide storage space. The storage space may optionally store application data, user data, an operating system, a computer program, and the like. The memory 502 may include a read-only memory (read-Only Memory, ROM) or another type of static storage device capable of storing static information and instructions, a random access memory (random access memory, RAM) or another type of dynamic storage device capable of storing information and instructions, or may be an electrically erasable programmable read-only memory (Electrically Erasable Programmable Read-Only Memory, EEPROM), a compact disc read-only memory (Compact Disc Read-Only Memory, CD-ROM) or another optical disc memory, a compact disc memory (including a compact disc, a laser disc, an optical disc, a digital versatile disc, a Blu-ray disc, and the like), a magnetic disk storage medium or another magnetic storage device, or any other medium that can be used to carry or store desired program code in a form of instructions or data structures and that can be accessed by a computer, but is not limited thereto.

The memory 502 may exist independently, and is connected to the processor 501 by using a bus. The memory 502 may alternatively be integrated with the processor 501.

The communication interface 503 is configured to provide information input or output for at least one processor, and/or, the communication interface 503 may be configured to receive data sent from the outside and/or send data to the outside. The communication interface 503 may be a wired link interface including an Ethernet cable, or may alternatively be a radio link (Wi-Fi, Bluetooth, general wireless transmission, and another wireless communications technology) interface. Optionally, the communication interface 503 may further include a transmitter (such as a radio frequency transmitter or an antenna), a receiver, or the like that is coupled to the interface.

In this embodiment of this application, the one or more programs are stored in the foregoing memory 502 in a form of program code, and are configured to be executed by the foregoing processor 501. The program includes instructions used to implement the foregoing navigation address determining method, for example, the navigation address determining method shown in FIG. 2 and FIG. 3. To be specific, the memory 502 stores executable instructions, and the processor 501 executes the executable instructions to implement the foregoing navigation address determining method, for example, the navigation address determining method in the embodiments of FIG. 2 and FIG. 3. In other words, the memory 502 stores the instructions used to implement the navigation address determining method.

Alternatively, the memory 502 stores the executable instructions, and the processor 501 executes the executable instructions to implement a function of the foregoing processing unit (or device), so as to implement the navigation address determining method.

This embodiment of this application further provides a computer program product including instructions. The computer program product may be software or a program product that contains instructions and that is capable of running in a computing device or being stored in any available medium. The computer program instructions are configured to implement the foregoing navigation address determining method, for example, the navigation address determining method in the embodiment shown in FIG. 2.

This embodiment of this application further provides a computer-readable storage medium. The computer-readable storage medium includes instructions, and the instructions are used to implement the foregoing navigation address determining method, for example, the navigation address determining method in the embodiment shown in FIG. 2.

The computer-readable storage medium may be any available medium on which the data processing apparatus can perform storage, or a data storage device such as a data center that includes one or more available media. The available medium may be a magnetic medium (for example, a floppy disk, a hard disk, or a magnetic tape), an optical medium (for example, a DVD), a semiconductor medium (for example, a solid-state drive), or the like.

In the embodiments of this application, words such as "example" or "for example" are used to represent giving an example, an illustration, or a description. Any embodiment or design solution described as "example" or "for example" in this application should not be construed as being preferred or advantageous over other embodiments or design solutions. Exactly, use of the words such as "example" or "for example" is intended to present a related concept in a specific manner.

In the embodiments of this application, "at least one" means one or more, and "a plurality of" means two or more. "At least one of the following items" or a similar expression means any combination of these items, including a single item or any combination of a plurality of items. For example, at least one of a, b, or c may represent a, b, c, (a and b), (a and c), (b and c), or (a, b, and c), where a, b, and c may be singular or plural. "And/or" describes an association relationship between associated objects and indicates that three relationships may exist. For example, A and/or B may indicate the following cases: Only A exists, both A and B exist, and only B exists, where A and B may be singular or plural. The character "/" usually indicates an "or" relationship between the associated objects.

In addition, unless otherwise specified, in embodiments of this application, ordinal words such as "first" and "second" are used to distinguish between a plurality of objects, and are not used to limit sequences, time sequences, priorities, or importance degrees of the plurality of objects. For example, a first content providing apparatus and a second content providing apparatus are merely for ease of description, and do not indicate a difference in device structures, deployment sequences, importance degrees, or the like between the first content providing apparatus and the second content providing apparatus.

It can be understood by a person of ordinary skill in the art that implementing all or some of the operations in the foregoing embodiments can be accomplished by using hardware or in a manner that the program instructs related hardware. The program can be stored in a computer-readable storage medium. The foregoing storage medium may be a read-only memory, a magnetic disk, an optical disc, or the like.

Finally, it should be noted that, the foregoing embodiments are merely used to describe rather than limit the technical solutions of this application. Although this application is described in detail with reference to the aforementioned embodiments, it should be understood by a person skilled in the art that the technical solutions described in the aforementioned embodiments may still be amended, or some of the technical features may be replaced by equivalents. Such amendments or replacements do not deviate the essence of the corresponding technical solutions from the protection scope of the technical solutions of the embodiments of this application.

## Claims

1. A navigation address determining method, comprising:
identifying (S201) a first point of interest POI, address in a navigation command;
obtaining (S202), based on the first POI address, N similar POI addresses and address types of the N similar POI addresses by retrieving an address data set, wherein each of the N similar POI addresses is similar to the first POI address, and N is an integer greater than or equal to 1;
determining (S203) a first address type based on the address types of the N similar POI addresses; and
determining (S204) a navigation address in a map based on the first POI address and the first address type.

2. The method according to claim 1, wherein the identifying a first POI address in a navigation command comprises:
identifying, by using a navigation entity identification model, the navigation command entered by a user to obtain an entity in the navigation command; and
determining the first POI address based on the entity in the navigation command.

3. The method according to claim 1 or 2, wherein the address data set comprises a plurality of POI addresses and address types corresponding to the plurality of POI addresses; and
the POI address in the address data set is determined based on at least one of the following: a plurality of navigation intentions or a plurality of real addresses.

4. The method according to any one of claims 1 to 3, wherein the determining a first address type based on the address types of the N similar POI addresses comprises:
calculating a first similarity between each of the N similar POI addresses and the first POI address; and
determining the first address type based on an address type and the first similarity that are of each of the N similar POI addresses.

5. The method according to claim 4, wherein the determining the first address type based on an address type and the first similarity that are of each of the N similar POI addresses comprises:
determining, as the first address type, an address type of a similar POI address that is in the N similar POI addresses and that has a first similarity being greater than or equal to a first threshold.

6. The method according to claim 4, wherein the determining the first address type based on an address type and the first similarity that are of each of the N similar POI addresses comprises:
determining, as the first address type, an address type of a similar POI address that is in the N similar POI addresses and that has a maximum first similarity.

7. The method according to any one of claims 1 to 3, wherein the determining a first address type based on the address types of the N similar POI addresses comprises:
determining, as the first address type, an address type of a similar POI address of the N similar POI addresses that occurs most frequently.

8. The method according to any one of claims 1 to 7, wherein the determining a navigation address in a map based on the first POI address and the first address type comprises:
determining M map POI addresses in the map based on the first POI address and the first address type, wherein the M map POI addresses have corresponding real addresses in the map, and M is an integer greater than or equal to 1;
determining a target address based on a second similarity between each of the M map POI addresses and the first POI address; and
using the target address as the navigation address if a second similarity between the target address and the first POI address is greater than a second threshold.

9. The method according to claim 8, wherein the determining a target address based on a second similarity between each of the M map POI addresses and the first POI address comprises:
determining, as the target address, a map POI address that is in the M map POI addresses and that has a maximum second similarity.

10. The method according to claim 8, wherein the navigation address is used to generate a navigation route to the navigation address.

11. The method according to claim 8, wherein the method further comprises:
if the second similarity between the target address and the first POI address is less than the second threshold, outputting prompt information, wherein the prompt information is used to indicate the user to enter a POI address or indicate that the first POI address is an invalid address.

12. A data processing apparatus (40), wherein the data processing apparatus comprises an identification unit (402) and a processing unit (401);
the identification unit being configured to identify a first point of interest POI address in a navigation command; and
the processing unit being configured to:
obtain, based on the first POI address, N similar POI addresses and address types of the N similar POI addresses by retrieving an address data set, wherein each of the N similar POI addresses is similar to the first POI address, and N is an integer greater than or equal to 1;
determine a first address type based on the address types of the N similar POI addresses; and
determine a navigation address in a map based on the first POI address and the first address type.

13. A data processing apparatus (50), wherein the data processing apparatus comprises a processor (501) and a memory (502), the memory storing a program, and the program comprising instructions used to perform the method according to any one of claims 1-11.

14. A computer-readable storage medium, wherein the computer-readable storage medium is configured to store a computer program, and the computer program comprises instructions used to perform the method according to any one of claims 1-11.
